# EUROPEAN PATENT APPLICATION

(11) **EP 2 677 402 A1**
(43) Date of publication of application: **25.12.2013**
(21) Application number: 11858671.8
(22) Date of filing: 26.10.2011
(51) Int. Cl.: G06F 3/041

(54) **INPUT DEVICE, INPUT METHOD, AND RECORDING MEDIUM**

(30) Priority: 16.02.2011 JP 2011031058
(71) Applicant: NEC CASIO Mobile Communications, Ltd., Kawasaki-shi Kanagawa 211-8666 (JP)
(72) Inventor: TAKANO, Satoshi, Kawasaki-shi, Kanagawa 211-8666 (JP)
(74) Representative: Vossius & Partner
(86) International application number: PCT/JP2011/074633
(87) International publication number: WO 2012/111194

(57) **Abstract**

An input apparatus comprises detection means that detects a position of instruction means as a detected position; and position determining means that when the detection means detects a plurality of detected positions by detecting the position of the instruction means a plurality of times, performs a position determining process of determining an input position of the instruction means using the plurality of detected positions detected by the detection means and changes the position determining process based on a last detected position from among the plurality of detected positions.

## Description

### Technical Field

The present invention relates to an input apparatus, an input method, and a recording medium, and more particularly to an input apparatus, an input method, and a recording medium for determining the input position of a finger, a stylus pen, and the like.

### Background Art

There has been known a device with a touch panel (see Patent Literature 1), and the number of mobile devices with a touch panel for improving usability is increasing. The size of a mobile device has been reduced to the extent. The size of a touch panel cannot be made greater than the size of a display.

The touch panel can acquire a position pressed by a user using a finger as the detected position. Thus, the touch panel mounted on a mobile device is often used as an input apparatus of a drawing application for the user to freely draw lines and curves on a display thereof.

### Citation List

### Patent Literature

Patent Literature 1: JP2010-152685A

### Summary of Invention

### Technical Problem

In he touch panel that acquires, as a detected position, a position specified by the finger of a user or a stylus pen, as disclosed in Patent Literature 1, the detected position may be not stable due to trembling of the finger of the user, electronic noise, or the like.

In order to make the instability of the detected position less visible to the user, it can be considered to perform an averaging process for taking an average of a plurality of positions detected at a predetermined time interval and for using the average as the input position of the finger or the stylus pen.

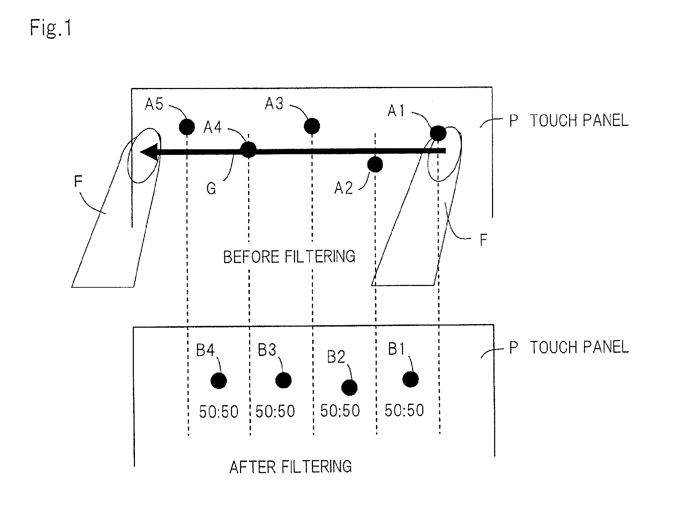

Figure 1 illustrates an example of the averaging process for taking an average of two detected positions detected at a predetermined time interval as the input position of the finger.

Figure 1 illustrates detected positions A1 to A5 detected at a predetermined time interval as finger F moves in a direction indicated by arrow G on touch panel P and input positions B1 to B4 determined by an averaging process that uses detected positions A1 to A5.

In Figure 1, input position B1 is a position represented by the average of detected position A1 and detected position A2; and input position B4 is a position represented by the average of detected position A4 and detected position A5. In this case, the weighting ratio between each of the detected positions for use in determining the input position is 50:50.

However, the averaging process to be executed involves a problem in that when a user takes an action of tracing (sweeping) a touch panel so that the touched position when the action ends is beyond an end portion of the touch panel, it is difficult to reduce the difference between an input position closest to the end portion of the touch panel and the position of the end portion of the touch panel among the input positions.

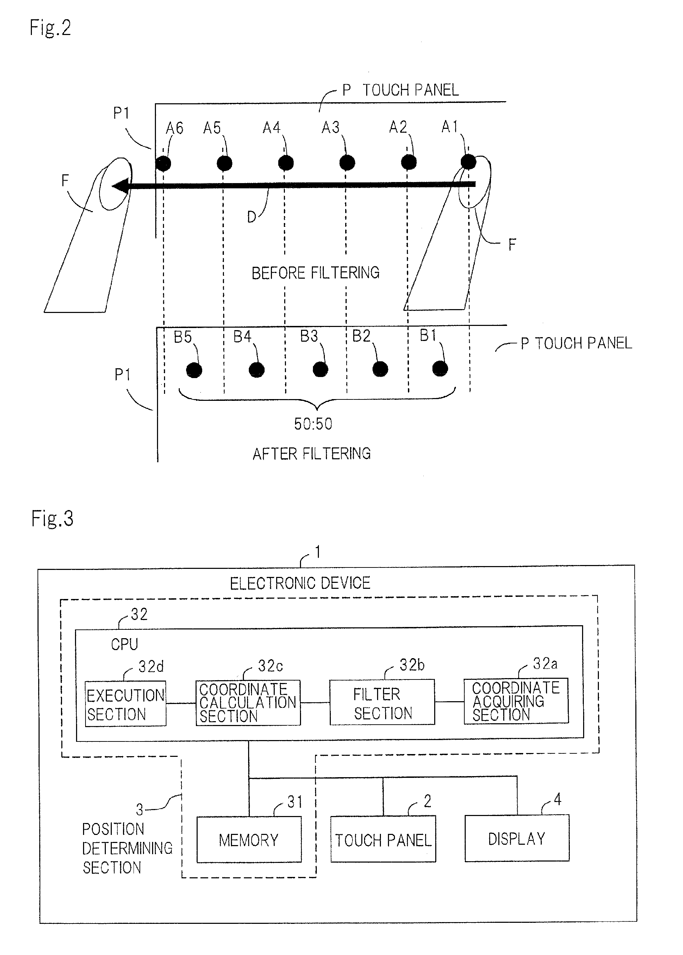

Figure 2 is a view for describing the above problem. Note that in Figure 2, the same reference numerals or characters are assigned to the same components as those illustrated in Figure 1.

In Figure 2, of input positions B1 to B5, input position B5 closest to end portion P1 of touch panel P is the average of detected position A6 and detected position A5, and thus farther away from end portion P1 than detected position A6.

The aforementioned problem is manifested particularly when the touch panel is used for a drawing application or a game such as drawing a line on a portion traced by a finger. For example, consider that an entire display region is used as a canvas for a drawing application; and a user traces an endmost portion of a display (=touch panel), but no point or no line is drawn near the endmost portion, which is inconvenient for the user.

In addition, the aforementioned problem occurs not only in a touch panel that detects the position of a finger or a stylus pen through contact with the finger or the stylus pen, but also in an input apparatus that obtains one input position using a plurality of detected positions (for example, an input apparatus that detects the position of a finger a plurality of times by a capacitive sensor in a non-contact state and performs an averaging process using a plurality of detected results to determine an input coordinate position).

An object of the present invention is to provide an input apparatus, an input method, and a recording medium capable of solving the aforementioned problem.

### Solution to Problem

An input apparatus according to the present invention includes detection means that detects a position of instruction means as a detected position; and position determining means that when said detection means detects a plurality of detected positions by detecting the position of the instruction means a plurality of times, performs a position determining process of determining an input position of the instruction means using the plurality of detected positions detected by said detection means and changes the position determining process based on a last detected position from among the plurality of detected positions.

The input apparatus according to the present invention includes detection means that has an input region capable of detecting a position of instruction means, detects a position of the instruction means within the input region, and adjusts, each time the position of the instruction means is detected as a detected position, a detection timing such that the closer the detected position is to an outer edge of the input region, the shorter is the time until the next detection timing of the position of the instruction means; and position determining means that performs a position determining process of determining an input position of the instruction means using a predetermined number of detected positions detected by said detection means, the predetermined number being two or more.

An input method according to the present invention is an input method for an input apparatus that includes detecting a position of instruction means as a detected position; and when a plurality of detected positions are detected by detecting the position of the instruction means a plurality of times, performing a position determining process of determining an input position of the instruction means using the plurality of detected positions, and changing the position determining process based on the last detected position from among the plurality of detected positions.

An input method according to the present invention is an input method for an input apparatus that includes detecting a position of instruction means within an input region capable of detecting a position of the instruction means; adjusting, each time the position of the instruction means is detected as a detected position, a detection timing such that the closer the detected position is to an outer edge of the input region, the shorter is the time until the next detection timing of the position of the instruction means; and performing a position determining process of determining an input position of the instruction means using a predetermined number of detected positions, the predetermined number being two or more.

A recording medium according to the present invention is a computer-readable recording medium recording a program that causes a computer to execute: a detection procedure for detecting a position of instruction means as a detected position; and a position determining procedure for, when a plurality of detected positions are detected by detecting the position of the instruction means a plurality of times, performing a position determining process of determining an input position of the instruction means using the plurality of detected positions and changing the position determining process based on a last detected position from among the plurality of detected positions.

A recording medium according to the present invention is a computer-readable recording medium recording a program for causing a computer to execute: a detection procedure for detecting a position of instruction means within an input region capable of detecting a position of the instruction means, and adjusting, each time the position of the instruction means is detected as a detected position, a detection timing such that the closer the detected position is to an outer edge of the input region, the shorter is the time until the next detection timing of the position of the instruction means; and a position determining procedure for performing a position determining process of determining an input position of said instruction means using a predetermined number of detected positions, the predetermine number being two or more.

### Advantageous Effects of Invention

It is possible to set an input position of a finger or a stylus pen to be close to an end portion of an input apparatus while preventing variation of the input position of the finger or the stylus pen.

### Brief Description of Drawings

Figure 1 illustrates an example of an averaging process.
Figure 2 illustrates a problem occurring in the averaging process.
Figure 3 is a block diagram illustrating electronic device 1 as an example of an input apparatus according to a first exemplary embodiment.
Figure 4 illustrates an example of a plurality of areas within touch panel 2.
Figure 5 is a flowchart for describing an operation of electronic device 1.
Figure 6 illustrates an example of a finger traveling direction.
Figure 7 describes an example of determination in steps S200 and S210 (determination on X-direction peripheral portion a).
Figure 8 illustrates an example of a determining expression.
Figure 9 illustrates an example of a list of weighting factors.
Figure 10 illustrates a modified example of weighting factors.
Figure 11 illustrates an example of a coordinate calculation expression.
Figure 12 illustrates electronic device 1 including touch panel 2 and position determining section 3.
Figure 13 is a block diagram illustrating electronic device 1A according to a second exemplary embodiment.
Figure 14 is a flowchart for describing an operation of electronic device 1A.
Figure 15 illustrates an example of speed determining expression 121.
Figure 16 describes an effect of the second exemplary embodiment.
Figure 17 describes an effect of the second exemplary embodiment.
Figure 18 is a block diagram illustrating electronic device 1B according to a third exemplary embodiment.
Figure 19 is a flowchart for describing an operation of electronic device 1B.
Figure 20 is a block diagram illustrating electronic device 1C.

### Description of Embodiments

There follows a description of exemplary embodiments with reference to the accompanying drawings.

### (First exemplary embodiment)

Figure 3 is a block diagram illustrating electronic device 1 as an example of an input apparatus according to a first exemplary embodiment. Electronic device 1 may be a mobile phone, a mobile game machine or a mobile device such as a PDA (Personal Digital Assistant) or may be a device that operates connected to another device such as a terminal device of a PC (Personal Computer).

Electronic device I includes touch panel 2, position determining section 3, and display 4. Position determining section 3 includes memory 31 and a CPU (Central Processing Unit) 32. CPU 32 includes coordinate acquiring section 32a, filter section 32b, coordinate calculation section 32c, and execution section 32d.

Electronic device 1 receives an input of an unillustrated instruction section. The instruction section is, for example, the finger of a user or a stylus pen. The instruction section may be generally called instruction means.

Touch panel 2 may be generally called detection means.

Touch panel 2 has an input region capable of detecting a position of the instruction section. Touch panel 2 detects the position of the instruction section within the input region as a detected position. Hereinafter, the input region of touch panel 2 is also referred to simply as "touch panel 2."

Xy coordinates are allocated to touch panel 2. Touch panel 2 represents the position (detected position) of the instruction section on touch panel 2 as a combination (detected coordinate) of x-coordinate and y-coordinate. Specifically, as the position of the instruction section, the position on the x-coordinate and the position on the y-coordinate are detected individually.
While the instruction section is in contact with touch panel 2, touch panel 2 always detects the position of the instruction section at a constant period, and each time the position of the instruction section is detected, touch panel 2 notifies CPU 32 of a detected coordinate as the detected result.

In the present exemplary embodiment, a plurality of areas are allocated to touch panel 2.

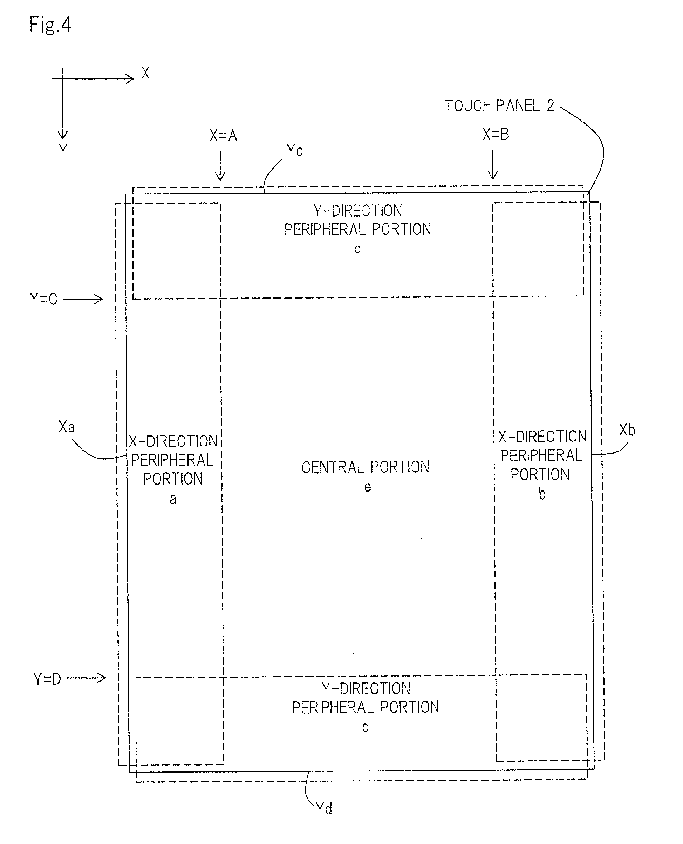

Figure 4 illustrates an example of the plurality of areas within touch panel 2.

In Figure 4, within touch panel 2 there are allocated X-direction peripheral portion a, X-direction peripheral portion b, Y-direction peripheral portion c, Y-direction peripheral portion d, and central portion e.

X-direction peripheral portion a is an area within a predetermined range from outer edge portion Xa of touch panel 2 (an area defined as a range from outer edge portion Xa to X=A). X-direction peripheral portion b is an area within a predetermined range from outer edge portion Xb of touch panel 2 (an area defined as a range from X=B to outer edge portion Xb). Y-direction peripheral portion c is an area within a predetermined range from outer edge portion Yc of touch panel 2 (an area defined as a range from outer edge portion Yc to Y=C). Y-direction peripheral portion d is an area within a predetermined range from outer edge portion Yd of touch panel 2 (an area defined as a range from Y=D to outer edge portion Yd). Central portion e is an area surrounded by X-direction peripheral portion a, X-direction peripheral portion b, Y-direction peripheral portion c, and Y-direction peripheral portion d of touch panel 2.

By referring back to Figure 3, position determining section 3 may be generally called position determining means.

Position determining section 3 performs a position determining process of determining an input position of the instruction section using a plurality of detected positions detected on touch panel 2. In the present exemplary embodiment, position determining section 3 applies weighting to a plurality of detected positions for use in the position determining process and performs a series of averaging processes of taking an average of individual weighted detected positions as the input position of the instruction section as the position determining process.

In addition, position determining section 3 changes the averaging process (position determining process) based on the position on touch panel 2 which is last detected (the position is hereinafter referred to as a "last detected position") from among the plurality of detected positions for use in the position determining process. In the present exemplary embodiment, position determining section 3 changes the weighting for the plurality of detected positions for use in the position determining process based on the last detected position.

For example, position determining section 3 applies weighting such that the closer the last detected position is to the outer edge of touch panel 2, the greater is the weighting for the last detected position than the weighting of the other detected position for use in the position determining process. In the present exemplary embodiment, position determining section 3 applies weighting such that the closer the last detected position is to the outer edge of touch panel 2, the greater incrementally is the weighting for the last detected position than the weighting of the other detected position for use in the position determining process.

In contrast to this, for example, position determining section 3 applies weighting such that the farther the last detected position is from the outer edge of touch panel 2, the smaller is the difference between respective weights of a plurality of detected positions for use in the position determining process. In the present exemplary embodiment, position determining section 3 applies weighting such that the farther the last detected position is from the outer edge of touch panel 2, the smaller incrementally is the difference between respective weights of a plurality of detected positions for use in the position determining process.

In addition, position determining section 3 identifies the traveling direction of the instruction section based on the last detected position and the detected position detected at a timing earlier than the timing at which the last detected position is detected. In the present exemplary embodiment, position determining section 3 identifies, as the traveling direction of the instruction section, the direction toward the last detected position from the detected position detected at a timing earlier than the timing at which the last detected position is detected.

If the traveling direction of the instruction section is outward (in a predetermined direction) from touch panel 2, position determining section 3 changes the averaging process based on the last detected position. However, if the traveling direction of the instruction section is not outward (in the predetermined direction) from touch panel 2, position determining section 3 does not change the averaging process based on the last detected position.

Memory 31 is an example of a computer-readable recording medium and stores various information and programs. In addition, memory 31 stores area information representing, by xy coordinates, each area of X-direction peripheral portion a, X-direction peripheral portion b, Y-direction peripheral portion c, Y-direction peripheral portion d, and central portion e. In addition, memory 31 stores a position (detected coordinate) of the instruction section detected on touch panel 2. In addition, memory 31 stores a list of weighting factors used when CPU 32 determines the input position of the instruction section using a plurality of detected coordinates. The list of weighting factors will be described later.

CPU 32 reads and executes a program in memory 31, controls each section in electronic device 1, and governs the processes to be executed by electronic device 1.

Coordinate acquiring section 32a acquires a detected coordinate from touch panel 2. Each time a detected coordinate is acquired, coordinate acquiring section 32a outputs the detected coordinate to filter section 32b.

Based on the detected coordinate from coordinate acquiring section 32a, filter section 32b determines the weighting factor for use in the averaging process (weighting factor given to each of the x-coordinate and the y-coordinate subjected to the averaging process).

In the present exemplary embodiment, when a detected coordinate is received from coordinate acquiring section 32a in a state in which no detected coordinate is stored in memory 31, filter section 32b stores the detected coordinate from coordinate acquiring section 32a in memory 31 without performing a process of determining the weighting factor.

Meanwhile, when a detected coordinate is received from coordinate acquiring section 32a in a state in which a detected coordinate is stored in memory 31, filter section 32b refers to the list of weighting factors in memory 31 and determines the weighting factors applied to the last detected coordinate and a detected coordinate (hereinafter referred to as "previously detected coordinate") in memory 31 based on a detected coordinate (hereinafter referred to as "last detected coordinate") from coordinate acquiring section 32a for each x-coordinate and y-coordinate thereof.

Filter section 32b applies weighting such that the closer the last detected position is to the outer edge of touch panel 2, the greater incrementally is the weighting for the last detected coordinate. Meanwhile, filter section 32b applies weighting such that the farther the last detected coordinate is from the outer edge of touch panel 2, the smaller incrementally is the difference between respective weights of the last detected coordinate and the previously detected coordinate.

In addition, filter section 32b identifies a direction toward the last detected coordinate from the previously detected coordinate as the traveling direction of the instruction section.

When the weighting factor is determined, filter section 32b outputs the weighting factor and the last detected coordinate to coordinate calculation section 32c.

When the weighting factor and the last detected coordinate are received, coordinate calculation section 32c individually applies the weighting factor to the last detected coordinate and the previously detected coordinate in memory 31) for weighting and executes an averaging process of taking the average of individually weighted detected coordinates as the input position of the instruction section.

When the input position of the instruction section is determined, coordinate calculation section 32c outputs the input position of the instruction section to execution section 32d and updates the detected coordinate in memory 31 to the last detected coordinate (unweighted last detected coordinate).

Execution section 32d may be generally called execution means.

Execution section 32d executes a pre-specified type of application program (such as an application program whose type is specified as "for drawing") to perform an operation according to the input position of the instruction section such as drawing a line on display 4 by connecting the input positions of the instruction section.

For example, display 4 draws an image according to an input from the instruction section to touch panel 2.

Note that electronic device 1 may be implemented by a computer. In this case, the computer reads and executes a program recorded in a computer-readable recording medium such as a CD-ROM (Compact Disk Read Only Memory) to function as touch panel 2, position determining section 3, and display 4. The recording medium is not limited to the CD-ROM, but may be changed as needed.

Now, the operation will be described.

In the following description, "50" is used as the default value of each weighting factor. Thus, when the default value is used as a weighting factor, the same weighting is applied to both the last detected coordinate and the previously detected coordinate.

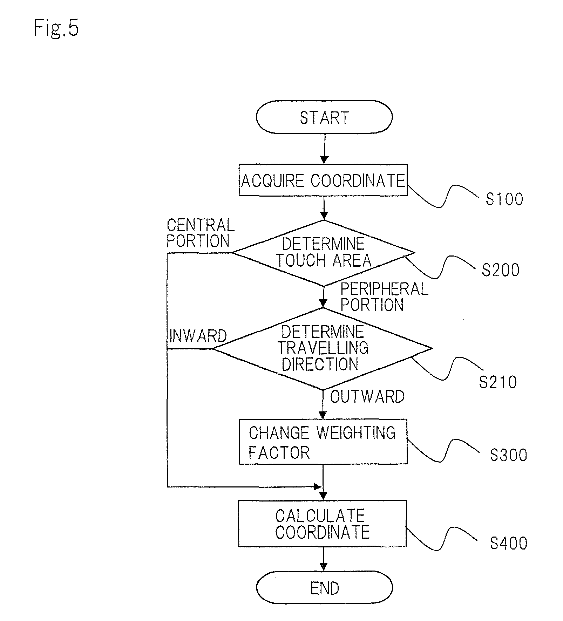

Figure 5 is a flowchart for describing an operation of electronic device 1.

In step S100, coordinate acquiring section 32a acquires the last detected coordinate from touch panel 2 that is in contact with a finger as the instruction section.

CPU 32 performs the processes in steps S200 to S400 separately for each X coordinate value and Y coordinate value.

In step S200, filter section 32b determines the area in touch panel 2 touched by the finger based on the last detected coordinate. In the present exemplary embodiment, filter section 32b determines the area touched by the finger by referring to area information in memory 31.

If the area touched by the finger is determined as central portion e, filter section 32b does not change the weighting factor from the default value.

If filter section 32b determines in step S200, which is for area determining, that the area touched by the finger is in a peripheral portion (any one of X-direction peripheral portion a, X-direction peripheral portion b, Y-direction peripheral portion c, and Y-direction peripheral portion d), filter section 32b determines the finger traveling direction in step S210 by comparing the last detected coordinate and the previously detected coordinate in memory 31.

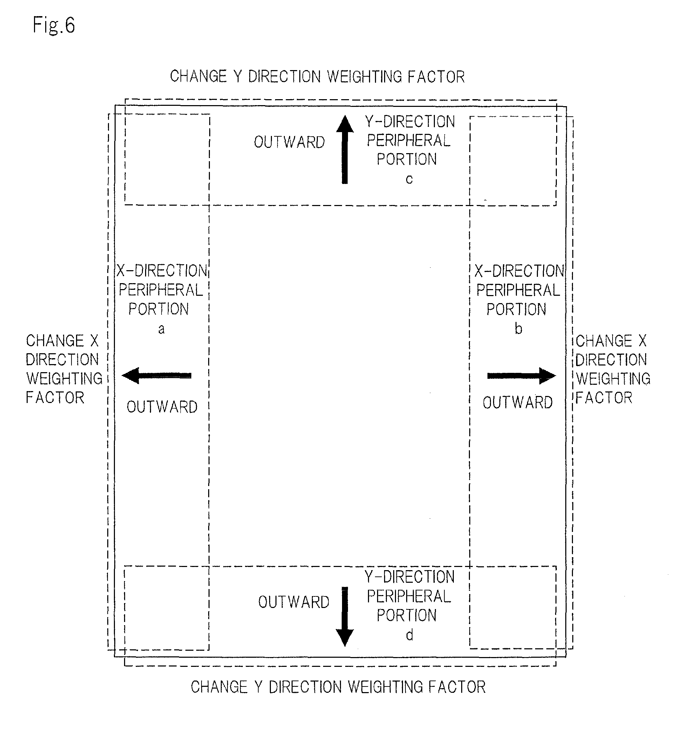

If the finger traveling direction is not in a direction outward from touch panel 2 from each peripheral portion area (for example, in a direction illustrated in Figure 6) (inward in step S210), filter section 32b does not change the weighting factor from the default value.

Figure 6 illustrates an example of a direction outward from touch panel 2 for each X-direction peripheral portion a, X-direction peripheral portion b, Y-directian peripheral portion c, and Y-direction peripheral portion d.

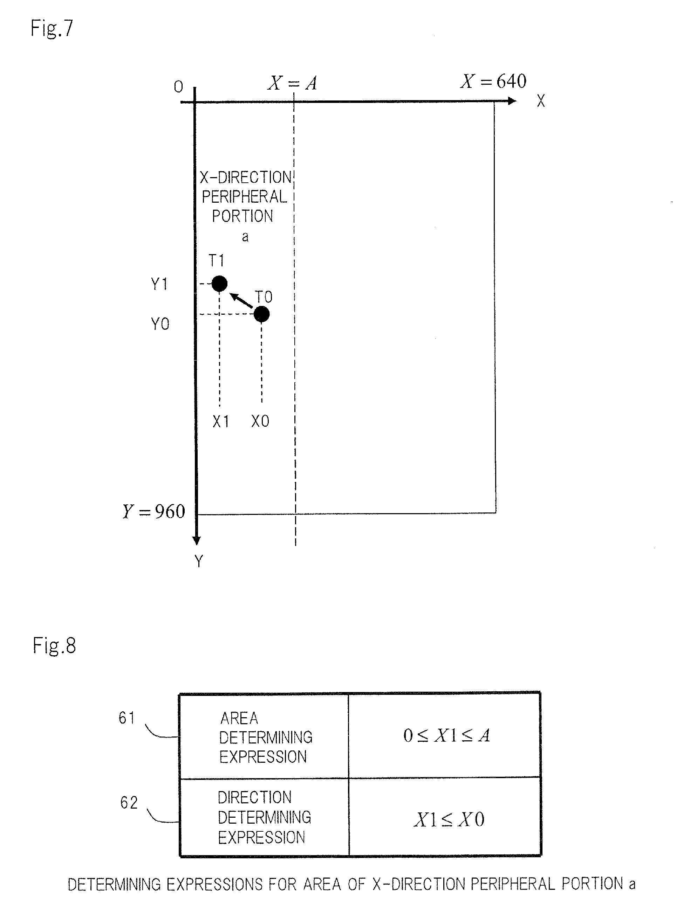

Figure 7 describes an example of determination in steps S200 and S210 (determination on X-direction peripheral portion a).

In the example illustrated in Figure 7, it is assumed that the size of display 4 (size of the input region of touch panel 2) is 640 x 960 (the number of pixels in the X direction is 640 and the number of pixels in the Y direction is 960). In addition, it is assumed that a detected coordinate (previously detected coordinate) acquired by coordinate acquiring section 32a at time T0 is (X0, Y0), and that a detected coordinate (last detected coordinate) acquired by coordinate acquiring section 32a subsequently at time T1 is (X1, Y1).

Filter section 32b determines in which area the finger is at time T1: X-direction peripheral portion a, X-direction peripheral portion b, Y-direction peripheral portion c, Y-direction peripheral portion d, or central portion e; and determines whether or not the finger moving direction is in the predetermined direction (outward) using an area determining expression and an direction determining expression.

Figure 8 illustrates an example of the area determining expressions.

Area determining expression 61 illustrated in Figure 8 is an expression for determining whether or not the finger is in X-direction peripheral portion a. If area determining expression 61 is satisfied, filter section 32b determines that the finger is in X-direction peripheral portion a. If area determining expression 61 is not satisfied, filter section 32b determines that the finger is not in X-direction peripheral portion a.

Direction determining expression 62 illustrated in Figure 8 is an expression for determining whether or not the movement of the finger located in X-direction peripheral portion a is an outward sweep. If direction determining expression 62 is satisfied, filter section 32b determines that the finger movement is an outward sweep. If direction determining expression 62 is not satisfied, filter section 32b determines that the finger movement is not an outward sweep. Note that even if the finger movement direction is parallel to the Y axis, direction determining expression 62 determines that the finger movement is an outward sweep.

For a determination on X-direction peripheral portion b, B ≤ X1 ≤ 640 is used as the area determining expression, and X0 ≤ X1 is used as the direction determining expression. For a determination on Y-direction peripheral portion c, 0 ≤ Y1 ≤ C is used as the area determining expression, and Y1 ≤ Y0 is used as the direction determining expression. For a determination on Y-direction peripheral portion d, D ≤ Y1 ≤ 960 is used as the area determining expression, and Y0 ≤ Y1 is used as the direction determining expression.

Note that in each of X-direction peripheral portion b, Y-direction peripheral portion c, and Y-direction peripheral portion d, the determination method using the area determining expression and the direction determining expression is the same as the determination method for X-direction peripheral portion a.

By referring back to Figure 5, if a determination is made that the finger is positioned in a peripheral portion and the finger movement is an outward sweep, the process moves to step S300, in which filter section 32b changes the weighting factor from the default value according to the finger touching position.

In the present exemplary embodiment, filter section 32b determines the weighting factor by referring to a list of weighting factors (preliminarily stored in memory 31) indicating a relation between a position on touch panel 2 and a weighting factor for the position.

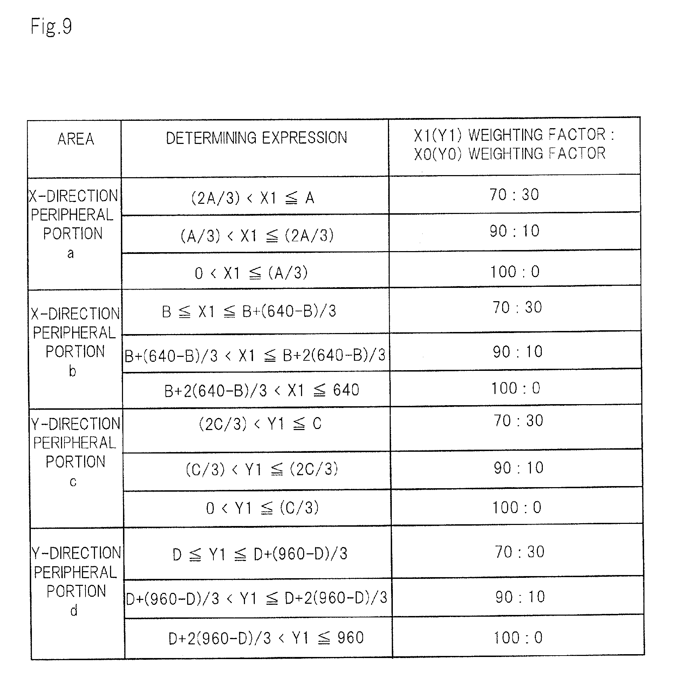

Figure 9 illustrates an example of a list of weighting factors for each of X-direction peripheral portion a, X-direction peripheral portion b, Y-direction peripheral portion c, and Y-direction peripheral portion d.

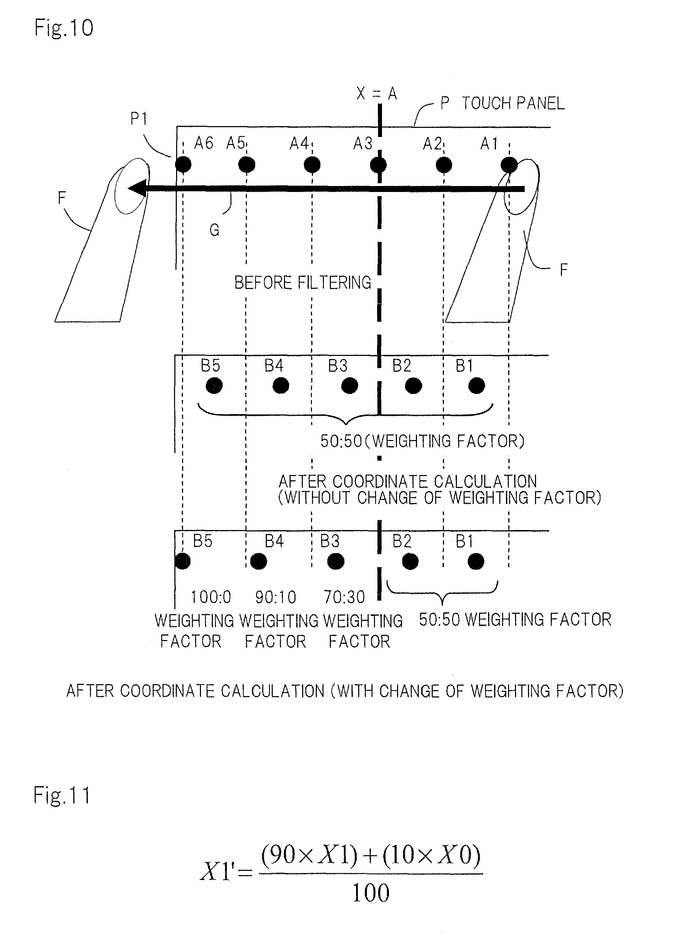

In Figure 10, as finger F moves in a direction indicated by arrow G on touch panel P, finger positions A1 to A6 are detected at a predetermined time interval, and input positions B1 to B5 are determined by an averaging process using finger positions A1 to A6. Figure 10 illustrates a relation between the finger positions and the input positions both when the weighting factors are not changed and when the weighting factors are changed based on the list of weighting factors illustrated in Figure 9.

By referring back to Figure 5, the process moves to step S400, in which coordinate calculation section 32c uses the weighting factors determined by filter section 32b to perform the averaging process and to calculate the final coordinate value (finger input position: finger input coordinate).

Figure 11 illustrates an example of a coordinate calculation expression. Note that the expression that is illustrated in Figure 11 corresponds to expression A/3 < X1 ≤ 2A/3. When the expression illustrated in Figure 11 is applied to the example illustrated in Figure 10, X0 corresponds to A4, X1 corresponds to A5, and X1' corresponds to B4.

It follows from the above description that the present exemplary embodiment including a mobile device with a touch panel mounted on a display and an application, such as drawing a portion traced by a finger or a stylus pen, can output coordinates so as to fully cover up the endmost portions of the display, thus is capable of improving usability.

According to the present exemplary embodiment, position determining section 3 uses a plurality of detected positions detected on touch panel 2 to perform a position determining process of determining the input position of the instruction section, and changes the position determining process based on the last detected position from among the plurality of detected positions for use in the position determining process.

Thus, for example, if the last detected position is close to the outer edge portion of touch panel 2, the position determining process can be changed such that the input position of the instruction section is made close to the last detected position; and if the last detected position is far away from the outer edge portion of touch panel 2, an average of the plurality of detected positions can be taken as the input position of the instruction section. This makes it possible to set the input position of the instruction section to be close to the end portion of touch panel 2 while preventing variation in input position.

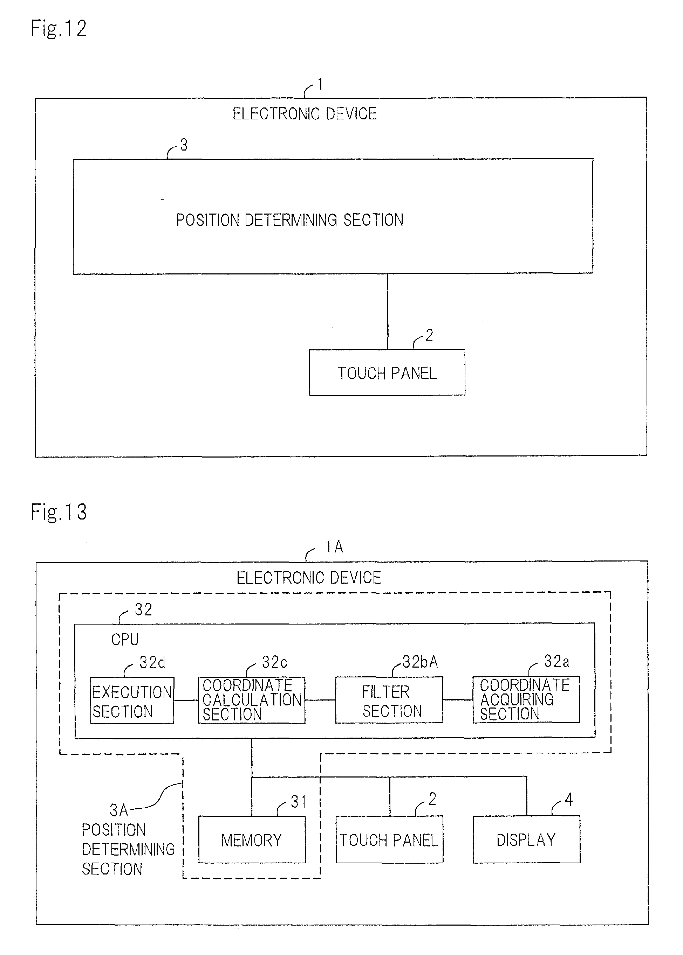

Note that this effect can also be exerted by electronic device 1 including touch panel 2 and position determining section 3. Figure 12 illustrates electronic device I including touch panel 2 and position determining section 3.

For that matter, this effect can also be exerted by electronic device 1 including touch panel 2 and position determining section 3 including memory 31, coordinate acquiring section 32a, filter section 32b, and coordinate calculation section 32c. In this case, a configuration may be such that execution section 32d and display 4 are included in another device and execution section 32d receives the input position of the instruction section from coordinate calculation section 32c.

In the present exemplary embodiment, position determining section 3 applies weighting to a plurality of detected positions for use in the position determining process, performs a series of averaging processes of taking an average of individually weighted detected positions as the input position of the instruction section as the position determining process, and changes the weighting for the plurality of detected positions for use in the averaging process based on the last detected position.

In this case, for example, it is possible that the closer the last detected position is to the outer edge portion of touch panel 2, the larger is the weighting of the last detected position; and the farther away the last detected position is from the outer edge portion of touch panel 2, the more even is the weighting for the plurality of detected positions. This makes it possible to set the input position of the instruction section to be close to the end portion of touch panel 2 while preventing variation in input position.

In addition, in the present exemplary embodiment, position determining section 3 applies weighting such that the closer the last detected position is to the outer edge of touch panel 2, the larger is the weighting for the last detected position than the weighting of the other detected position. For example, if the last detected position is located in a predetermined region in the input region of touch panel 2 (peripheral area: any one of X-direction peripheral portion a, X-direction peripheral portion b, Y-direction peripheral portion c, and Y-direction peripheral portion d), position determining section 3 applies weighting such that the closer the last detected position is to the outer edge of touch panel 2, the larger is the weighting for the last detected position than the weighting of the other detected position. This makes it possible to set the input position of the instruction section to be close to the end portion of touch panel 2 while suppressing variation in input position.

In addition, in the present exemplary embodiment, position determining section 3 further adjusts the weighting such that the farther the last detected position is from the outer edge of touch panel 2, the smaller is the difference between respective weights of a plurality of detected positions. This further makes it possible to suppress variation in input position as much as possible.

In addition, in the present exemplary embodiment, position determining section 3 identifies the traveling direction of the instruction section based on the last detected position and the previously detected position; and if the traveling direction is in the predetermined direction, position determining section 3 changes the position determining process based on the last detected position. For example, if the traveling direction of the instruction section is outward from touch panel 2, there is a high probability that the user will move the instruction section up to the end portion of touch panel 2. Thus, for example, if the traveling direction is in the predetermined direction (outward from touch panel 2), it is possible to execute changing the position determining process based on the last detected position, as needed.

Note that in the present exemplary embodiment, in a state in which the instruction section is located in a peripheral portion (any one of X-direction peripheral portion a, X-direction peripheral portion b, Y-directian peripheral portion c, and Y-direction peripheral portion d), if as illustrated in Figure 5, the traveling direction of the instruction section is outward from touch panel 2, the weighting is changed; and if the traveling direction of the instruction section is inward to touch panel 2, the weighting is not changed. Thus, if the instruction section moves as if the instruction section were swaying in the peripheral portion, the input position of the instruction section is shifted according to the shaking direction.

In view of this, in order to prevent this shifting, step S210 illustrated in Figure 5 may be omitted from the present exemplary embodiment. In this case, in a state in which the instruction section is located in the peripheral portion, the weighting is not changed according to the traveling direction of the instruction section. This makes it possible to solve the problem in that the input position of the instruction section is shifted according to the direction of the sway of the instruction section.

### (Second exemplary embodiment)

Figure 13 is a block diagram illustrating electronic device 1A according to a second exemplary embodiment. Note that in Figure 13, the same reference numerals or characters are assigned to the same components as those illustrated in Figure 3.

A major difference between electronic device 1A according to the second exemplary embodiment and electronic device 1 according to the first exemplary embodiment is that filter section 32b included in electronic device 1 according to the first exemplary embodiment is replaced with filter section 32bA.

Filter section 32bA has not only the functions of filter section 32b but also a function of identifying the speed of the instruction section and a function of determining whether the speed of the instruction section is equal to or greater than a predetermined speed.

Filter section 32bA identifies the speed of the instruction section based on the last detected position, the previously detected position, and the time from when the previously detected position is detected to when the last detected position is detected.

If the speed of the instruction section is equal to or greater than the predetermined speed, filter section 32bA changes the weighting factor based on the last detected position.

Note that electronic device 1A may be implemented by a computer. In this case, the computer reads and executes a program recorded in a computer-readable recording medium such as a CD-ROM to function as touch panel 2, position determining section 3 A and display 4.

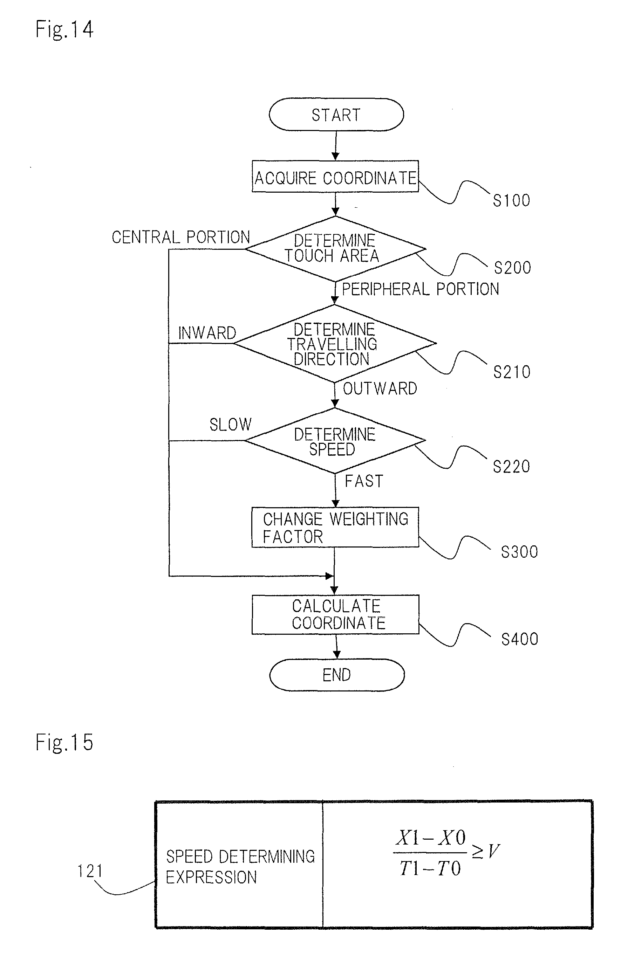

Figure 14 is a flowchart for describing an operation of electronic device 1A. Note that in Figure 14, the same reference numerals or characters are assigned to the same processes as those illustrated in Figure 5. There follows a description of an operation of electronic device 1A focusing on processes that are different from those illustrated in Figure 5.

After determining the traveling direction (step S210), filter section 32bA determines the speed of the instruction section in step S220.

Figure 15 illustrates an example of speed determining expression 121. In Figure 15, predetermined speed V is preliminarily determined, and speed determining expression 121 is preliminarily stored in memory 31.

If the speed of the instruction section is higher than predetermined speed V, namely, if speed determining expression 121 is satisfied, filter section 32bA changes the weighting factor.

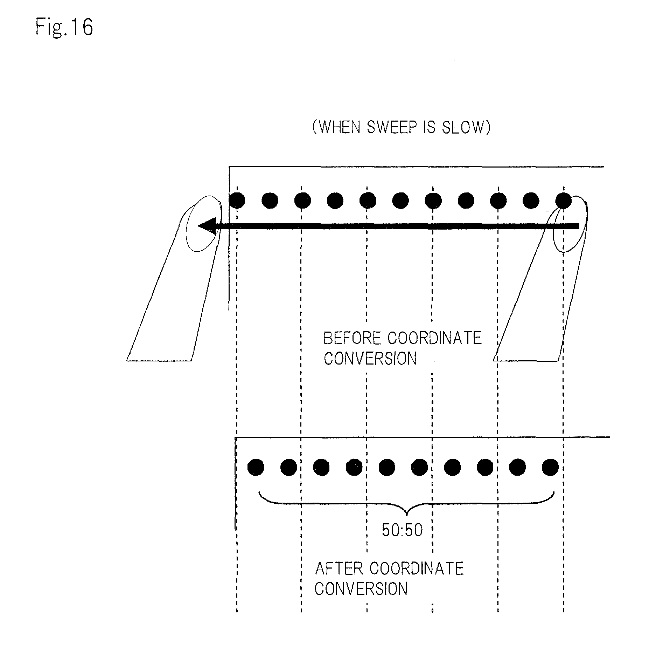

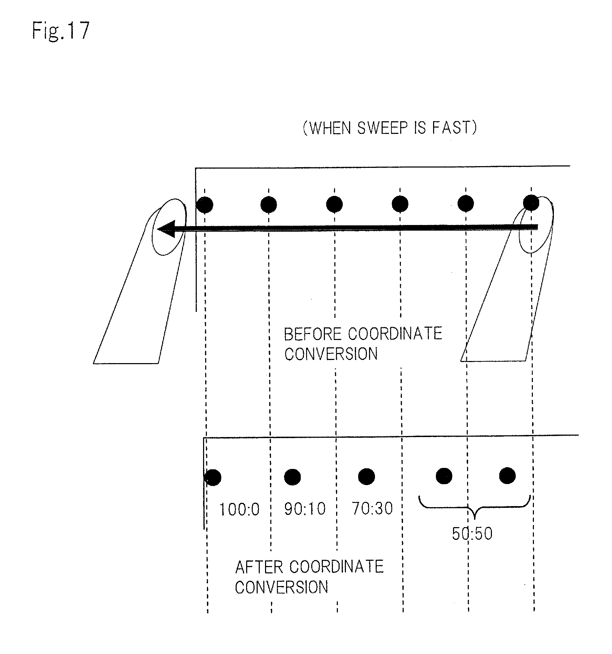

Figures 16 and 17 describe an effect of the second exemplary embodiment.

According to the present exemplary embodiment, position determining section 3A identifies the speed of the instruction section based on the last detected position, the previously detected position, and the time from when the previously detected position is detected to when the last detected position is detected; and if the speed of the instruction section is equal to or greater than the predetermined speed, position determining section 3 A changes the weighting factor based on the last detected position.

When the sweep is slow, as illustrated in Figure 16, an endmost portion coordinate is likely to be output as the input position of the instruction section without changing the weighting factor, and thus position determining section 3A corrects variation of the coordinates without changing the weighting factor.

Meanwhile, when the sweep is fast, position determining section 3A can output the endmost portion coordinate by changing the weighting factor as illustrated in Figure 17.

### (Third exemplary embodiment)

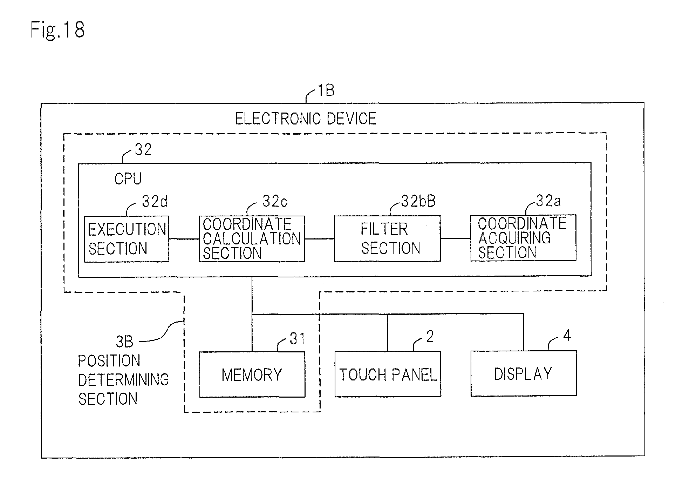

Figure 18 is a block diagram illustrating electronic device 1B according to a third exemplary embodiment. Note that in Figure 18, the same reference numerals or characters are assigned to the same components as those illustrated in Figure 13.

A major difference between electronic device 1B according to the third exemplary embodiment and electronic device I A according to the second exemplary embodiment is that filter section 32bA included in electronic device 1A according to the second exemplary embodiment is replaced with filter section 32bB.

Filter section 32B has not only the functions of filter section 32bA but also a function of identifying the type of an application program executed by execution section 32d and a function of determining whether or not the type of the application program is a predetermined type. Note that the type of an application program is preliminarily identified by the user and the like, and the identified type is preliminarily set to the application program or memory 31 as attribute information for each application. Filter section 32bB refers to the settings to identify the type of the application program executed by execution section 32d.

If the type of the application program executed by execution section 32d is a predetermined type (for example, a drawing application program), filter section 32bB changes the weighting factor based on the last detected position.

Note that electronic device 1B may be implemented by a computer. In this case, the computer reads and executes a program recorded in a computer-readable recording medium such as a CD-ROM to function as touch panel 2, position determining section 3B and display 4.

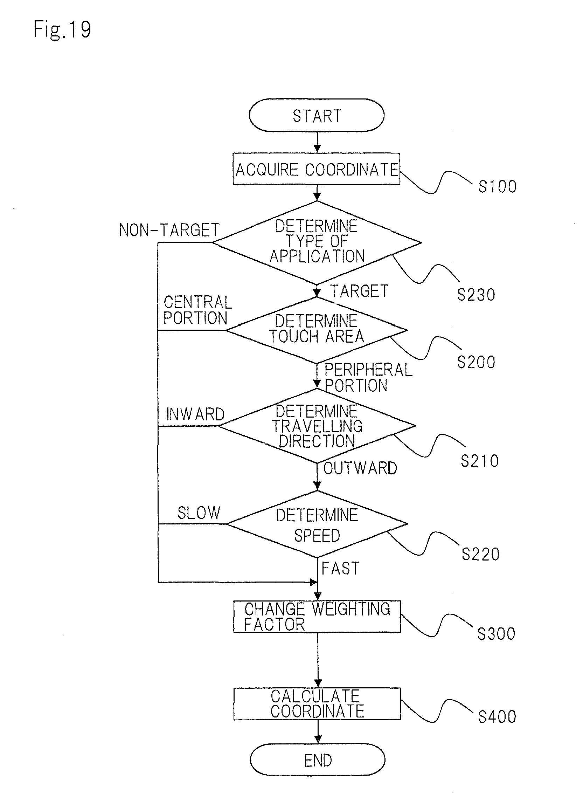

Figure 19 is a flowchart for describing an operation of electronic device 1B. Note that in Figure 19, the same reference numerals or characters are assigned to the same processes as those illustrated in Figure 14. There follows a description of an operation of electronic device 1B focusing on processes that are different from those illustrated in Figure 14.

Before step S200, filter section 32bB determines the type of an application program executed by execution section 32d (step S230). If the type of the application program executed by execution section 32d is not a type of an application program such as drawings are carried out to the endmost portion of display 4 (for example, a drawing application program), filter section 32bB does not change the weighting factor.

In the third exemplary embodiment, if the type of an application program executed by execution section 32d is a predetermined type, position determining section 3B changes the weighting factor based on the last detected position.

An effect of the third exemplary embodiment is to prevent the weighting factor from being changed even in a case of an application program such as selecting by touching (clicking) a button (icon) laid on an image of the display (even if the application is not a drawing application).

Note that in each of the aforementioned exemplary embodiments, the detection means is not limited to touch panel 2, but for example, may be a detection section that detects the position of the instruction section in a non-contact manner (a detection section that detects the position of the instruction section by a capacitive sensor in a non-contact manner).

In addition, in each of the aforementioned exemplary embodiments, the number of detected positions for use in the averaging process is assumed to be "2," but the number of detected positions for use in the averaging process may be two or more.

In addition, position determining section 3, 3A, or 3B (specifically coordinate calculation section 32c) may adjust the weighting such that the closer the last detected position is to the outer edge of the input region, the smaller is the number of detected positions other than the last detected position from among a plurality of detected positions for use in the averaging process. Note that the plurality of detected positions for use in the averaging process is assumed to be sequentially detected at a detection period interval by touch panel 2.

For example, if the last detected position is located in central portion e, coordinate calculation section 32c takes an average of the last detected position and two or three or more detected positions in the past as the input position of the input section; and if the last detected position is located in a peripheral portion (any one of X-direction peripheral portion a, X-direction peripheral portion b, Y-direction peripheral portion c, and Y-direction peripheral portion d), coordinate calculation section 32c takes an average of the previously detected position and the last detected position as the input position of the input section. In this case, even if position determining section 3, 3A, or 3B does not change the weighting factor, the input position of the input section in the peripheral portion comes close to the actual position of the input section (last detected position). Thus, in this case, position determining section 3, 3A, or 3B need not change the weighting factor. For example, touch panel 2 detects the position of the instruction section in the input region at a predetermined time interval; touch panel 2 sequentially detects a plurality of detected positions for use in the averaging process at a predetermined time interval; and position determining section 3. 3A, or 3B adjusts the number of detected positions such that the closer the last detected position is to the outer edge of the input region, the smaller is the number of detected positions other than the last detected position of the plurality of detected positions for use in the averaging process.

In addition, in each of the aforementioned exemplary embodiments, a configuration may be such that a processing section is provided in touch panel 2; and each time the position (detected position) of the instruction section is detected, the processing section (touch panel 2) refers to area information in memory 31 and adjusts a detection timing such that the closer a newly detected position is to an outer edge of the input region of touch panel 2, the shorter is the time until the next detection timing of the position of the instruction section. In this case, although the speed of the instruction section is slow, the interval of a predetermined number (for example, two) of detected positions for use in the averaging process is narrowed, which provides the effect as illustrated in Figure 16. Note that in this case, position determining section 3, 3A. or 3B need not change the weighting factor.

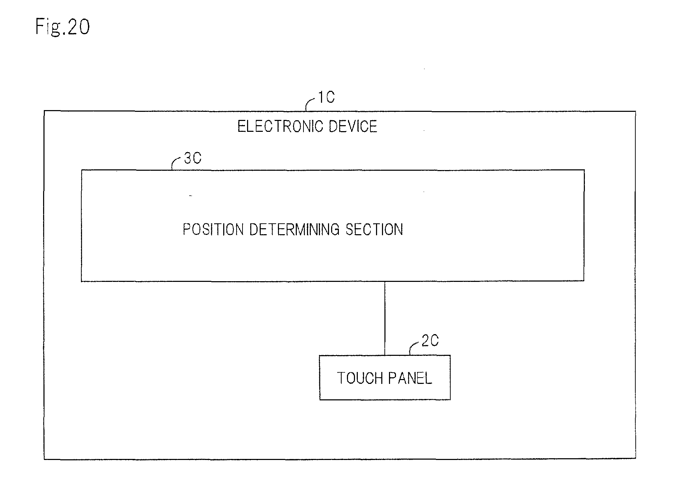

Figure 20 is a block diagram illustrating electronic device 1C including touch panel 2C having the aforementioned processing section and position determining section 3C that does not change the weighting factor (position determining section 3, 3A, or 3B that does not change the weighting factor).

Touch panel 2C may be generally called detection means. Each time the position (detected position) of the instruction section is detected, touch panel 2C adjusts the detection timing such that the closer a newly detected position is to an outer edge of the input region of touch panel 2, the shorter is the time until the next detection timing of the position of the instruction section.

Position determining section 3C may be generally called position determining means. Position determining section 3C performs a position determining process of determining an input position of the instruction section using a predetermined plurality (for example, two) of detected positions detected on touch panel 2C.

Note that electronic device 1C may be implemented by a computer. In this case, the computer reads and executes a program recorded in a computer-readable recording medium such as a CD-ROM to function as touch panel 2C and position determining section 3C.

In electronic device I C, each time the position of the instruction section is detected, touch panel 2C adjusts the detection timing such that the closer a newly detected position is to an outer edge of the input region of touch panel 2, the shorter is the time until the next detection timing of the position of the instruction section. Position determining section 3C performs a position determining process of determining an input position of the instruction section using a predetermined plurality (for example, two) of detected positions detected on touch panel 2C.

Thus, although the speed of the instruction section is slow, the interval of a predetermined number of detected positions for use in the averaging process is narrowed, which provides the effect as illustrated in Figure 16.

In addition, in each of the aforementioned exemplary embodiments, a central portion need not be provided in touch panel 2. In this case, A has the same value as B illustrated in Figure 4, and C has the same value as D illustrated in Figure 4.

In addition, in each of the aforementioned exemplary embodiments, the size of touch panel 2 is not limited to 640 x 960.

In addition, in each of the aforementioned exemplary embodiments, position determining section 3, 3A, or 3B adjusts the weighting such that the closer the last detected position is to the outer edge of touch panel 2, the greater incrementally is the weighting for the last detected position, but may adjust the weighting such that the closer the last detected position is to the outer edge of touch panel 2, the greater linearly is the weighting for the last detected position is or may increase the weighting for the last detected position according to a predetermined function (for example, a quadratic function).

In addition, each of the aforementioned exemplary embodiments may be modified as follows.

Touch panel 2 outputs the x-coordinate and the y-coordinate of the last detected position together with the x-coordinate and the y-coordinate of the previously detected position as a detection signal having a frequency band corresponding to the magnitude of each coordinate value.

Filter section 32b, 32bA, or 32bB changes a physical filter for receiving a detection signal of the previously detected position according to the last detected position to adjust the frequency band of the detection signal of the previously detected position.

Coordinate calculation section 32c averages the x-coordinate and the y-coordinate indicated by the detection signal of the previously detected position with the adjusted frequency band and the x-coordinate and the y-coordinate indicated by the detection signal of the last detected position for each coordinate axis, and takes the average as the input position of the input section.

The above cases also exert the same effect as each of the aforementioned exemplary embodiments.

In each of the aforementioned exemplary embodiments, the illustrated configuration is just an example, and the present invention is not limited to the configuration.

For example, in each of the aforementioned exemplary embodiments, a configuration may be such that the position determining section is included in the touch panel and the touch panel outputs final coordinate information (the input position of the instruction section).
(Supplementary note 1) An input apparatus comprising:
detection means that detects a position of instruction means as a detected position; and
position determining means that when said detection means detects the detected position a plurality of times, performs a position determining process of determining an input position of said instruction means using a plurality of detected positions detected by said detection means and changes the position determining process based on a last detected position from among the plurality of detected positions.
(Supplementary note 2) The input apparatus according to supplementary note 1, wherein
said position determining means performs, as the position determining process, a series of processes of applying weighting to the plurality of detected positions and of taking an average of individual weighted detected positions as the input position, and changes the weighting for the plurality of detected positions based on the last detected position.
(Supplementary note 3) The input apparatus according to supplementary note 2, wherein
said detection means has an input region capable of detecting a position of said instruction means, and detects the position of said instruction means within the input region; and
said position determining means applies weighting such that the closer to an outer edge of the input region the last detected position is, the greater than the weighting for the other detected positions of the plurality of detected positions the weighting for the last detected position is.
(Supplementary note 4) The input apparatus according to supplementary note 2 or 3, wherein
said detection means has an input region capable of detecting a position of said instruction means, and detects the position of said instruction means within the input region; and
said position determining means applies weighting such that the farther away from an outer edge of the input region the last detected position is, the smaller the difference between respective weights of the plurality of detected positions is.
(Supplementary note 5) The input apparatus according to any one of supplementary notes 1 to 4, wherein
said position determining means identifies a traveling direction of said instruction means based on the last detected position and one or more detected positions including the detected position different from the last detected position; and if the traveling direction is a predetermined direction, said position determining means changes the position determining process based on the last detected position.
(Supplementary note 6) The input apparatus according to any one of supplementary notes 1 to 5, wherein
said position determining means identifies a speed of said instruction means based on the last detected position, the previously detected position different from the last detected position from among the plurality of detected positions, and the time from when the previously detected position is detected to when the last detected position is detected; and if the speed is equal to or greater than a predetermined speed, said position determining means changes the position determining process based on the last detected position.
(Supplementary note 7) The input apparatus according to any one of supplementary notes 1 to 6, further comprising:
execution means that executes a pre-specified type of application program to perform an operation according to the input position, wherein
if the type of the application program is a predetermined type, said position determining means changes the position determining process based on the last detected position. (Supplementary note 8) An input apparatus comprising:
detection means that has an input region capable of detecting a position of instruction means, detects a position of the instruction means within the input region, and adjusts, each time the position of the instruction means is detected as a detected position, a detection timing such that the closer the detected position is to an outer edge of the input region, the shorter is the time until the next detection timing of the position of the instruction means; and
position determining means that performs a position determining process of determining an input position of the instruction means using a predetermined number of detected positions
   detected by said detection means, the predetermined number being two or more.
   (Supplementary note 9) An input method for an input apparatus, the input method comprising:
   detecting a position of instruction means as a detected position; and
   when the detected position is detected a plurality of times, performing a position determining process of determining an input position of said instruction means using a plurality of detected positions including the detected position; and changing the position determining process based on a last detected position from among the plurality of detected positions. (Supplementary note 10) An input method for an input apparatus, the input method comprising:
   detecting a position of instruction means within an input region capable of detecting a position of said instruction means, and adjusting a detection timing such that each time the position of said instruction means is detected as a detected position, the closer to an outer edge of the input region the detected position is, the shorter the time until a next detection timing of the position of said instruction means is; and
   determining an input position of said instruction means using a predetermined plurality of detected positions including the detected position.
   (Supplementary note 11) A computer-readable recording medium recording a program for causing a computer to execute:
   a detection procedure for detecting a position of instruction means as a detected position; and
   a position determining procedure for, when the detected position is detected a plurality of times, performing a position determining process of determining an input position of said instruction means using a plurality of detected positions including the detected position and changing the position determining process based on a last detected position of the plurality of detected positions.
   (Supplementary note 12) A computer-readable recording medium recording a program for causing a computer to execute:
   a detection procedure for detecting a position of instruction means within an input region capable of detecting a position of said instruction means, and adjusting a detection timing such that each time the position of said instruction means is detected as a detected position, the closer to an outer edge of the input region the detected position is, the shorter the time until a next detection timing of the position of said instruction means is; and
   a position determining procedure for performing a position determining process of determining an input position of said instruction means using a predetermined plurality of detected positions including the detected position.

Hereinbefore, the present invention has been described with reference to exemplary embodiments, but the present invention is not limited to the aforementioned exemplary embodiments. Various modifications readily apparent to those skilled in the art can be made to the configuration and the detail of the present invention within the scope of the present invention.

This application is based upon and claims the benefit of priority from the prior Japanese Patent Application No. 2011-031058 filed on February 16, 2011, the entire contents of which are incorporated herein by reference.

### Reference Signs List

1, 1A, 1B, 1C electronic device
2, 2C touch panel
3, 3A, 3B, 3C position determining section
31 memory
32 CPU
32a coordinate acquiring section
32b, 32bA, 32bB filter section
32c coordinate calculation section
32d execution section
4 display

## Claims

1. An input apparatus comprising:
detection means that detects a position of instruction means as a detected position; and
position determining means that, when said detection means detects a plurality of detected positions by detecting the position of the instruction means a plurality of times, performs a position determining process of determining an input position of the instruction means using a plurality of detected positions detected by said detection means and changes the position determining process based on a last detected position from among the plurality of detected positions.

2. The input apparatus according to claim 1, wherein said position determining means performs, as the position determining process, a series of processes of applying weighting to the plurality of detected positions and of taking an average of individual weighted detected positions as the input position, and changes the weighting for the plurality of detected positions based on the last detected position.

3. The input apparatus according to claim 2, wherein
said detection means has an input region capable of detecting a position of the instruction means, and detects the position of the instruction means within the input region; and
said position determining means applies weighting such that the closer the last detected position is to an outer edge of the input region, the greater is the weighting for the last detected position than the weighting for the other detected positions of the plurality of detected positions.

4. The input apparatus according to claim 2 or 3, wherein
said detection means has an input region capable of detecting a position of the instruction means, and detects the position of the instruction means within the input region; and
said position determining means applies weighting such that the farther away the last detected position is from an outer edge of the input region, the smaller is the difference between respective weights of the plurality of detected positions.

5. The input apparatus according to any one of claims 1 to 4, wherein said position determining means identifies a traveling direction of the instruction means based on the last detected position and one or more detected positions other than the last detected position; and if the traveling direction is a predetermined direction, said position determining means changes the position determining process based on the last detected position.

6. An input apparatus comprising:
detection means that has an input region capable of detecting a position of instruction means, detects a position of the instruction means within the input region, and adjusts, each time the position of the instruction means is detected as a detected position, a detection timing such that the closer the detected position is to an outer edge of the input region, the shorter is the time until the next detection timing of the position of the instruction means; and
position determining means that performs a position determining process of determining an input position of the instruction means using a predetermined number of detected positions detected by said detection means, the predetermined number being two or more.

7. An input method for an input apparatus, the input method comprising:
detecting a position of instruction means as a detected position; and
when a plurality of detected positions are detected by detecting the position of the instruction means a plurality of times, performing a position determining process of determining an input position of the instruction means using the plurality of detected positions, and changing the position determining process based on a last detected position from among the plurality of detected positions.

8. An input method for an input apparatus, the input method comprising:
detecting a position of instruction means within an input region capable of detecting a position of the instruction means, and adjusting, each time the position of the instruction means is detected as a detected position, a detection timing such that the closer the detected position is to an outer edge of the input region, the shorter is the time until the next detection timing of the position of the instruction means; and
performing a position determining process of determining an input position of the instruction means using a predetermined number of detected positions, the predetermined number being two or more.

9. A computer-readable recording medium recording a program that causes a computer to execute:
a detection procedure for detecting a position of instruction means as a detected position; and
a position determining procedure for, when a plurality of detected positions are detected by detecting the position of the instruction means a plurality of times, performing a position determining process of determining an input position of the instruction means using the plurality of detected positions and changing the position determining process based on a last detected position from among the plurality of detected positions.

10. A computer-readable recording medium recording a program that causes a computer to execute:
a detection procedure for detecting a position of instruction means within an input region capable of detecting a position of the instruction means, and adjusting, each time the position of the instruction means is detected as a detected position, a detection timing such that the closer the detected position is to an outer edge of the input region, the shorter is the time until the next detection timing of the position of the instruction means; and
a position determining procedure for performing a position determining process of determining an input position of the instruction means using a predetermined number of detected positions, the predetermine number being two or more.
